# EUROPEAN PATENT SPECIFICATION

(11) **EP 3 020 870 B1**
(45) Date of publication and mention of the grant of the patent: **19.12.2018**
(21) Application number: 15192200.2
(22) Date of filing: 29.10.2015
(51) Int. Cl.: E02F 9/02, E02F 9/08, E02F 3/96, E02F 9/12

(54) **AN UNDERCARRIAGE FOR A WORKING MACHINE**
FAHRWERK FÜR EINE ARBEITSMASCHINE
CHÂSSIS DE ROULEMENT POUR UNE MACHINE DE TRAVAIL

(30) Priority: 29.10.2014 GB 201419277
(43) Date of publication of application: 18.05.2016
(73) Proprietor: JC Bamford Excavators Ltd, Rocester Uttoxeter Staffordshire ST14 5JP (GB)
(72) Inventor: Price, David, Uttoxeter, Staffordshire ST14 5JP (GB)
(74) Representative: Foot, Paul Matthew James

(56) References cited:
- WO-A1-2013/084597
- WO-A1-2014/039041
- JP-A- 2011 012 512

## Description

### FIELD OF THE INVENTION

The present invention relates to an undercarriage for a working machine, a working machine having an undercarriage and to a method of assembling an undercarriage of a working machine.

### BACKGROUND OF THE INVENTION

Various types of working machines are known. Such machines are used typically for soil-shifting operations (e.g. trenching, grading, and loading) and materials handling (e.g. depositing aggregate in trenches, lifting materials and placing them on an elevated platform).
Such machines are typically manufactured from a set of subassemblies designed specifically for one type of machine, although certain components such as engines, gearboxes, hydraulic pumps and undercarriages may be shared across different machine types. A machine according to the prior art is disclosed in document WO2013/084597. Examples of known machines include the following:
Slew excavators comprise a superstructure rotatable in an unlimited fashion relative to an undercarriage. The superstructure includes a working arm arrangement for manipulating an attachment, such as a bucket, to perform working operations of the type listed above, a prime mover, such as a diesel IC engine, a hydraulic pump, and an operator cab. The prime mover drives the hydraulic pump, in order to provide pressurised fluid to operate the working arm arrangement, and also to power one or more hydraulic motors located in the undercarriage that are used to selectively drive either two endless tracks or four wheels (or eight wheels in a dual wheel configuration) for propelling the excavator.
A slew ring rotatably connects the superstructure and undercarriage, and a central rotary joint arrangement enables hydraulic fluid to pass from the pump in the superstructure to the hydraulic motor, and return to the superstructure, irrespective of the relative positions of the superstructure and undercarriage. If the slew excavator uses tracks for propulsion, steering is effected by differentially driving the tracks on opposing sides of the undercarriage. If the slew excavator uses wheels for propulsion, a steering arrangement is used for either two or four wheels, and separate hydraulic control is required for this in the undercarriage.

Slew excavators are available in a wide range of sizes. Micro, mini and midi excavators span an operating weight range from around 750kg up to around 12,000kg and are notable for typically having a working arm arrangement that is capable of pivoting about a substantially vertical axis relative to the superstructure by using a "kingpost" interface to the superstructure. Generally, mini and midi excavators have a weight of above around 1,200 kg. Large excavators, whose operating weight exceeds around 12,000kg are often referred to as 'A frame' excavators and typically have a working arm arrangement that is fixed about a vertical axis, and can therefore only slew together with the superstructure. This is a function of the fact that the smaller excavators are expected to operate in more confined spaces and the ability to slew about two mutually offset axes in order to, for example, trench close to an obstacle such as a wall is therefore more desirable for micro, mini and midi excavators.

The working arm arrangement generally includes a boom pivotally connected to a dipper. There are several types of booms available including: a triple articulated boom which has two pivotally connected sections; and a mono boom that is often made from a single generally curved structure. A dipper is pivotally connected to the boom and a mount for an attachment, e.g. a bucket, is provided on the dipper. Hydraulic cylinders are provided to move the boom, dipper and mount relative to each other so as to perform a desired working operation.

Tracked excavators are not able to travel under their own propulsion for significant distances due to a low maximum speed and the damage their metal tracks cause to paved roads. However their tracks enhance the stability of the excavator. Wheeled excavators are capable of "roading" at higher speeds (typically up to 40kph), and without appreciably damaging paved road surfaces. However, the working arm assembly inevitably extends forward of the superstructure during roading, which can impair ride quality, and forward visibility. When performing working operations the pneumatic tyres provide a less stable platform than tracks, so additional stabiliser legs can be deployed for stability.

Since the prime mover, hydraulic pump, hydraulic reservoir etc. are located in the superstructure, the centre of gravity of all types of slew excavator is relatively high. Whilst these components can be positioned to act as a counterbalance to forces induced during working operations, packaging constraints may force such positioning to be sub-optimal, and may also restrict sight-lines over the rear of the machine, for example.

Excavators are generally used for operations such as digging. However, if it is desired to perform an operation such as loading, an alternative type of machine must be used. Machines capable of loading operations are known and have various formats. In one format, commonly referred to as a "telescopic handler" or "telehandler", the superstructure and undercarriage are fixed relative to each other and a central working arm in the form of a two or more part telescopic boom extends fore-aft of the machine. The boom pivots about a horizontal axis towards the aft end of the machine, an attachment is releasably mounted to a fore end of the boom, and is pivotable about a second distinct horizontal axis. Commonly used attachments include pallet forks and shovels. Telehandlers may be used for general loading operations (e.g. transferring aggregate from a storage pile to a required location on a construction site) and lifting operations, such as lifting building materials on to an elevated platform.

Telehandlers typically have four wheels on two axles for propulsion, with one or both axles being steerable and driven. A prime mover (typically a diesel IC engine) may be located in a pod offset to one side of the machine between front and rear wheels and is connected to the wheels by a hydrostatic or mechanical transmission. An operator cab is often located on the other side of the boom to the prime mover, and is relatively low between the wheels. Depending upon its intended application, the machine may be provided with deployable stabiliser legs.

A subset of telehandlers mount the cab and boom on a rotatable superstructure in order to combine lifting with slewing operations, at the expense of additional weight and greater height. As these machines are used principally for lifting, instead of loading, they have a longer wheelbase than conventional telehandlers to accommodate a longer boom, impacting manoeuvrability. Further, as sight-lines towards the ground close to the machine are less critical for lifting than for excavating, these are consequently quite poor.

For some lifting operations, particularly those of heavy load, it is more appropriate to use a crane than a telehandler. Mobile cranes are generally provided on a wheeled or tracked base. A boom, often a telescopic boom, is pivotally mounted to the base. Hoists, wire ropes or chains and sheaves are connected to the boom and used for moving materials from one location to another. The safety regulations for cranes are often stricter than the safety regulations for telehandlers.

In alternative working operations a worker may need to access an elevated work area, in such cases a mobile elevated work platform (MEWP) may be used. A MEWP generally has a wheeled base with a working arm connected thereto. The working arm carries a platform for a worker. The working arm may be for example, a scissor lift or an extensible or articulating boom. Since use of an MEWP involves working at an elevated level, there are again different technical and safety requirements imposed on an MEWP compared to those of the previously described working machines.

A yet further alternative working machine is a dump truck (also known as a dumper truck). A dump truck is often used for transporting material from one location to another (e.g. a multiplicity of loads from an excavator bucket). A dump truck has a dump body or a box bed that is pivotable to permit contents of the dump body to be unloaded. A tipping mechanism that is generally actuated by one or more hydraulic cylinders, and in some cases a cylinder and lever arrangement, is used to tip the dump body.

The cost to develop different machines such as those above for different working applications is significant. Further, the cost and delay to switch a production line from one type of machine to another is also significant.

In addition, large assemblies for these machines may be manufactured in one location and the shipped a significant distance to a second location for assembly. The shipping cost may high be due to the bulk of the assemblies and the shape thereof, making packing thereof for transport inefficient.

### SUMMARY OF THE INVENTION

A first aspect of the invention provides an undercarriage for a working machine comprising a main chassis and a subsidiary chassis, wherein the main chassis comprises a mounting arrangement to mount a superstructure thereon and a mounting interface to mount the subsidiary chassis thereon, wherein the subsidiary chassis comprises a mount for an axle; characterised in that; a side pod is mounted to the main chassis, the side pod comprising a drive arrangement including a prime mover..

Providing a main chassis which can be substantially the same across a variety of working machines, may reduce the number of parts and allows for a single production line to produce multiple machines thereby reducing cost. The modular arrangement may also save cost by making transport of the main and subsidiary chassis more efficient if manufactured and assembled at different locations, as it may be possible to pack more chassis into a given volume for shipping if split into multiple assemblies .

In one embodiment, the subsidiary chassis further comprises an actuator to perform a work function.

In one embodiment, the subsidiary chassis comprises a dozer blade arrangement.

In one embodiment, the subsidiary chassis comprises a stabilizer.

Providing the subsidiary chassis with either a dozer blade arrangement or a stabilizer leg arrangement advantageously permits customisation of undercarriage for different applications.

In one embodiment, the actuator is housed within the subsidiary chassis.

Housing the actuator within the subsidiary chassis may advantageously improve visibility of the operator and also may protect the actuator from external collisions.

In one embodiment, the subsidiary chassis comprises a front and a rear end and two side surfaces extending therebetween.

In one embodiment, the length of the subsidiary chassis is a selected one of at least two subsidiary chassis of different lengths.

Providing more than one length of subsidiary chassis advantageously permits customisation of undercarriage for different applications.

In one embodiment, the main chassis further comprises an ECU for controlling the drive arrangement.

In one embodiment, the mounting arrangement comprises a slew ring to mount a superstructure thereon.

In one embodiment, the main and subsidiary chassis are secured substantially permanently to each other.

In one embodiment, the main and subsidiary chassis are releasably secured to each other.

In one embodiment, the subsidiary chassis further comprises a mounting interface.

In one embodiment, the mounting interfaces of the main and subsidiary chassis comprise complementary welding surfaces.

In one embodiment, the mounting interfaces of the main and subsidiary chassis comprise a plurality of bores.

In one embodiment, the mounting interfaces of the main and subsidiary chassis are substantially vertical.

In one embodiment, an axle is mounted to the subsidiary chassis.

In one embodiment, a second subsidiary chassis is mounted to the main chassis.

A second aspect of the invention provides a working machine comprising a superstructure including a working arm configured so as to be capable of performing working operations, and an undercarriage according to the first aspect, wherein the undercarriage is mounted to the superstructure via the mounting arrangement.

A third aspect of the invention provides a method of forming an undercarriage of a working machine, comprising the steps of: manufacturing a main chassis; mounting a side pod to the main chassis, the side pod comprising a drive arrangement including a prime mover; manufacturing a subsidiary chassis; and mounting the subsidiary chassis to the main chassis.

In one embodiment, the method comprises a further step of selecting from at least two alternative working machines types which working machine type the undercarriage is to be incorporated into, and selecting the subsidiary chassis to be mounted to the main chassis in accordance with the working machine selected.

### BRIEF DESCRIPTION OF THE DRAWINGS

Embodiments of the invention will now be described with reference to the accompanying drawings, in which:
Figure 1 is a side view of a working machine;
Figure 2 is a plan view of the machine of Figure 1;
Figure 3 is a schematic view of a hydraulic and electronic control system of the machine of Figure 1;
Figure 4 is a side view of a working machine according to an embodiment of the present invention;
Figure 5 is a side view of a working machine according to an embodiment of the present invention;
Figure 6 is an isometric view of a main chassis according to an embodiment of the present invention;
Figure 7 is an isometric view of a subsidiary chassis according to an embodiment of the present invention;
Figure 8 is an isometric view of a subsidiary chassis according to an embodiment of the present invention;
Figure 9 is a side view of a working machine according to an embodiment of the present invention;
Figure 10 is a side view of a working machine according to an embodiment of the present invention.

### DETAILED DESCRIPTION OF EMBODIMENT(S)

### General Format

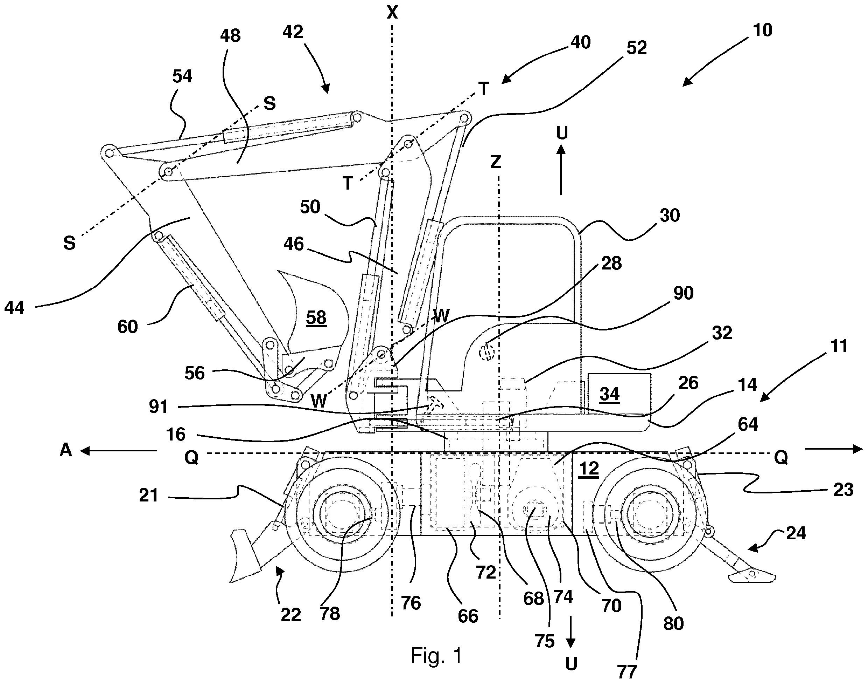

With reference to Figures 1 to 3, there is illustrated in somewhat simplified form a working machine 10 according to an embodiment of the present invention. In the present embodiment, the working machine may be considered to be a midi excavator (operating weight between approx. 6 and 12 metric tonnes). In other embodiments the working machine may be a mini excavator (operating weight between 1.2 and 6 tonnes). The machine comprises a base assembly 11 that includes an undercarriage 12. A superstructure 14 is linked to the undercarriage of the base assembly by a slewing mechanism in the form of a slewing ring 16. The slewing ring 16 permits unrestricted rotation of the superstructure relative to the undercarriage 12 in this embodiment. A cab 30 from which an operator can operate the working machine is rotatably mounted to the superstructure. A working arm arrangement 40 is rotatably mounted to the superstructure and provided for performing excavating operations.

### Undercarriage

The undercarriage is formed from a pair of spaced chassis rails 18a and 18b extending fore-aft, and typically but not always being parallel, or substantially so. The rails provide a majority of the strength of the undercarriage 12. The undercarriage is connected to a ground engaging structure, which in this embodiment includes first and second drive axles 20a and 20b mounted to the chassis rails 18a, 18b and wheels rotatably attached to each axle end. In this embodiment the second drive axle 20b is fixed with respect to the chassis rails 18a, 18b, whereas the first drive axle 20a is capable of limited articulation, thereby permitting the wheels to remain in ground contact, even if the ground is uneven. The wheels 19a, 19b, 19c, 19d are typically provided with off-road pneumatic tyres. The wheels 19a, 19b, 19c, 19d connected to both axles are steerable via a steering hub 17a, 17b, 17c, 17d. In this embodiment, the wheelbase is 2.65m, and a typical range is 2.0m to 3.5m.

For the purposes of the present application, the fore-aft direction A is defined as a direction substantially parallel to the general direction of the chassis rails 18a and 18b. A generally upright direction U is defined as a direction substantially vertical when the working machine is on level ground. A generally lateral direction L is defined as a direction that is substantially horizontal when the working machine is on level ground and is substantially perpendicular to the fore-aft direction A.

In this embodiment a dozer blade arrangement 22 is pivotally secured to one end of the chassis rails 18a and 18b, which may be raised and lowered by hydraulic cylinders 21 using a known arrangement, and also act as a stabiliser for the machine, by lifting the adjacent wheels off the ground when excavating, however this may not be provided in other embodiments.

A stabiliser leg arrangement 24 is pivotally mounted to an opposite end of the chassis rails 18a and 18b, which also may be raised and lowered by hydraulic cylinders 23 using a known arrangement, but in other embodiments this may be omitted.

### Drive

In this embodiment, the drive arrangement, including a prime mover and transmission are housed in the undercarriage 12, where the prime mover is a diesel IC engine 64.

A heat exchanger 66 and cooling fan 68 are housed in the undercarriage adjacent the engine 64. The cooling fan 68 is orientated such that the axis of rotation Q of the fan extends in a fore-aft direction A, although it may be oriented differently in other embodiments.

A fuel tank 70 provides a fuel supply to the engine 64. A hydraulic tank 72 is provided adjacent the fuel tank 70.

The engine 64, heat exchanger 66, cooling fan 68, fuel tank 70 and hydraulic tank 72 are all housed in a region between the axles 20a and 20b. As can be seen in Figure 1, the engine 64 is positioned below a level coincident with a lower extent of the superstructure 14. Indeed the majority of the engine 64, and in this embodiment the entire engine 64 is positioned below a level Q coincident with an upper extent of the wheels 19a, 19b, 19c, 19d. In the present embodiment the majority of the heat exchanger 66, cooling fan 68, fuel tank 70 and hydraulic tank 72 are below a level Q coincident with the upper extent of the wheels 19a, 19b, 19c, 19d.

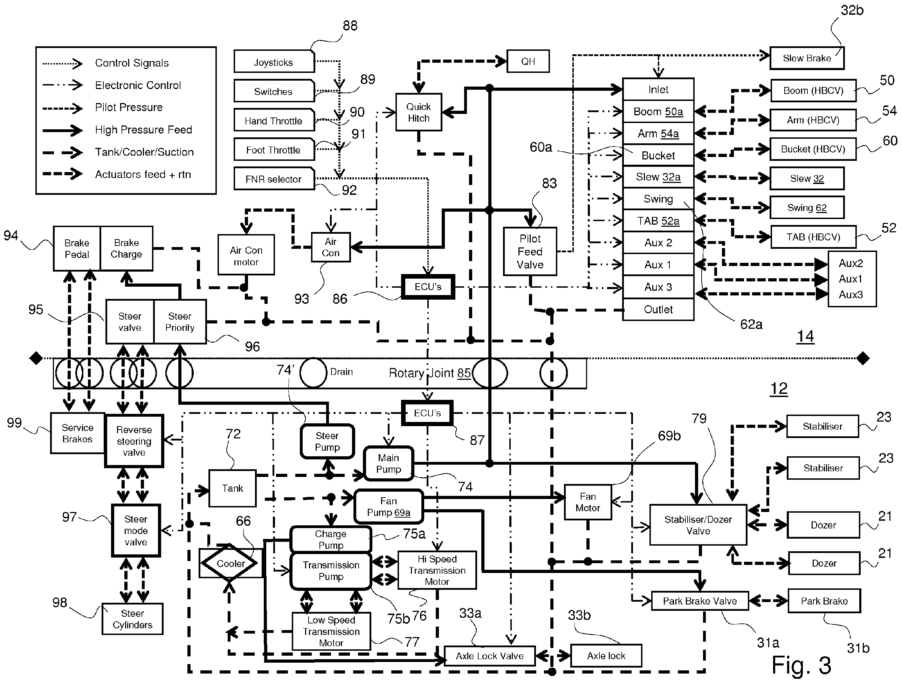

Referring to Figure 3, in the present embodiment the transmission is a hydrostatic transmission. The transmission includes a high pressure swash plate type hydraulic transmission pump 75b as well as an associated charge pump 75a. The transmission pump in turn is capable of selectively driving two hydraulic motors 76 and 77. The transmission pump 75b has a typical operating pressure of around 350-450bar (35-45MPa).

The engine 64 is configured to drive the charge pump 75a, and the transmission pump 75b. The pumps 75a and 75b are configured to draw hydraulic fluid from the hydraulic fluid tank 72 as required and supply to the hydraulic motors 76 and 77 via dedicated feed and return hoses (i.e. the flow is essentially closed loop but with hydraulic fluid drawn from and returned from the tank 72 as required). In the present embodiment, the hydraulic motor 76 is positioned towards the dozer blade arrangement 22. The engine 64, hydraulic pump 74, and hydraulic motor 77 are positioned towards the stabiliser arrangement 24.

The first hydraulic motor 76 is a high speed swash plate type motor having a large displacement range, for example of 0 to 255 cm³/revolution, and drives the front axle 20a in a normal direction of travel. The output of the motor faces forwards and drives the first axle 20a via a short drive shaft 78 and differential (not shown). The second hydraulic motor 77 is a relatively low speed swash plate type motor having a smaller displacement range for example of 0 to 125 cm³/revolution.. The low speed motor 77 connects to a second drive shaft 80 to drive the second (rear) axle 20b via a second differential (not shown).

In other embodiments a single hydraulic motor may provide drive to both the front and rear axles, typically with a two wheel drive/four wheel drive selector operating a clutch to disengage/engage drive to one axle.

The charge pump 75a and transmission pump 75b are positioned adjacent the engine 64 and are orientated such that an input to the pumps from the engine is axially aligned with an output from the engine to the pump.

Arranging the drive arrangement as described in the undercarriage has been found to result a reduction in the volume of components to be housed in the superstructure, in turn resulting in a line of sight over the right hand rear corner of the machine for an operator having a height of 185cm (a 95th percentile male) when seated in the operator's seat at the left hand side of the machine in excess of 30° (33° in this embodiment) below the horizontal (compared to around 22° in conventional midi excavators of this size). This results in a significant reduction of the ground area around the machine that is obscured by parts of the superstructure, thereby improving visibility for manoeuvring the machine.

A further advantage of positioning the drive arrangement in the undercarriage, compared to conventional excavators where the drive arrangement is generally positioned in the superstructure is that noise, vibration and harshness (NVH) isolation is improved between the engine and the cab to improve comfort and safety for an operator. In addition, access to the engine, fuel tank, fluid tank, etc. for maintenance and refuelling is at ground level.

### Superstructure

The superstructure 14 comprises a structural platform 26 mounted on the slew ring 16. As can be seen in the Figures, the slew ring 16 is substantially central to the undercarriage 12 in a fore-aft direction A and a lateral direction L, so as to mount the superstructure 14 central to the undercarriage. The slew ring 16 permits rotation of the superstructure 14 relative to the undercarriage about a generally upright axis Z.

A rotary joint arrangement 85 is provided central to the slew ring and is configured to provide multiple hydraulic fluid lines, a return hydraulic fluid line, and an electrical - Controller Area Network (CAN) - signal line to the superstructure 14 from the undercarriage, whilst permitting a full 360° rotation of the superstructure relative to the undercarriage. The configuration of such a rotary joint arrangement is known in the art.

The platform 26 mounts a cab 30. The cab houses the operator's seat and machine controls (discussed below).

The superstructure 14 is rotated relative to the undercarriage 12 using a first hydraulic motor 32 and brake.

The platform further mounts a kingpost 28 for a working arm arrangement 40. The kingpost 28 arrangement is known in the art, and permits rotation of the working arm about a generally upright axis X and about a generally lateral axis W.

The superstructure further comprises a counterweight 34 for the working arm arrangement positioned at an opposite side of the superstructure to the kingpost 28.

### Hydraulic supply

In the embodiment, illustrated in Figure 3, the engine 64 additionally drives a main, lower pressure hydraulic pump 74 arranged in series with the charge 75a and transmission pumps 75b. In this embodiment the main hydraulic pump has an operating pressure of around 250-300bar (25-30MPa) and is also of a variable displacement type.

The main pump 74 supplies hydraulic fluid to the hydraulic cylinders 50, 52, 54, 60, 62 for operating the working arm arrangement via associated valves in the superstructure 14 and denoted by the same numeral with the suffix 'a', to a slew brake via a pilot feed valve 83, and to auxiliary hydraulic fluid supplies for use by certain attachments such a grabs etc (not shown). The main pump 74 additionally supplies hydraulic cylinders 21, 23 of the dozer blade and stabiliser arrangement via a stabiliser/dozer valve 79 in the undercarriage. However, in alternative embodiments a single pump may be used for supplying hydraulic fluid to the motors and the hydraulic cylinders. The main pump 74 is further used to provide hydraulic fluid for air conditioning 93, as illustrated in Figure 3.

In this embodiment the engine additionally drives a separate pump 74' for the steering system and a fan pump 69a to drive a cooling fan 69b and a park brake valve 31a for a parking brake 31b. These pumps are in this embodiment gear pumps operable at a lower pressure of around 200bar (20MPa) and without ECU control.

Further, the charge pump 75a additionally supplies hydraulic fluid to an axle lock valve 33a which selectively prevents the articulation of the front axle 20a.

### Working arm

The working arm arrangement 40 of the present embodiment is an excavator arm arrangement. The working arm arrangement includes a triple articulated boom 42 pivotally connected to a dipper 44. The triple articulated boom 42 includes a first section 46 pivotally connected to a second section 48. A hydraulic cylinder 50 is provided to raise and lower the first section 46 of the boom 42 relative to the kingpost 28 about the generally lateral axis W. A further hydraulic cylinder 52 is provided to pivot the second section 48 of the boom 42 relative to the first section of the boom about a generally lateral axis T. A yet further hydraulic cylinder 54 is provided to rotate the dipper 44 relative to the boom 42 about a generally lateral axis S. A mount 56 is provided to pivotally mount an attachment to the dipper 44, in the present embodiment the attachment is a bucket 58. A hydraulic cylinder 60 is provided to rotate the attachment relative to the dipper 44. Alternatively boom cylinder arrangements (e.g. twin cylinders) may however be utilised in other embodiments.

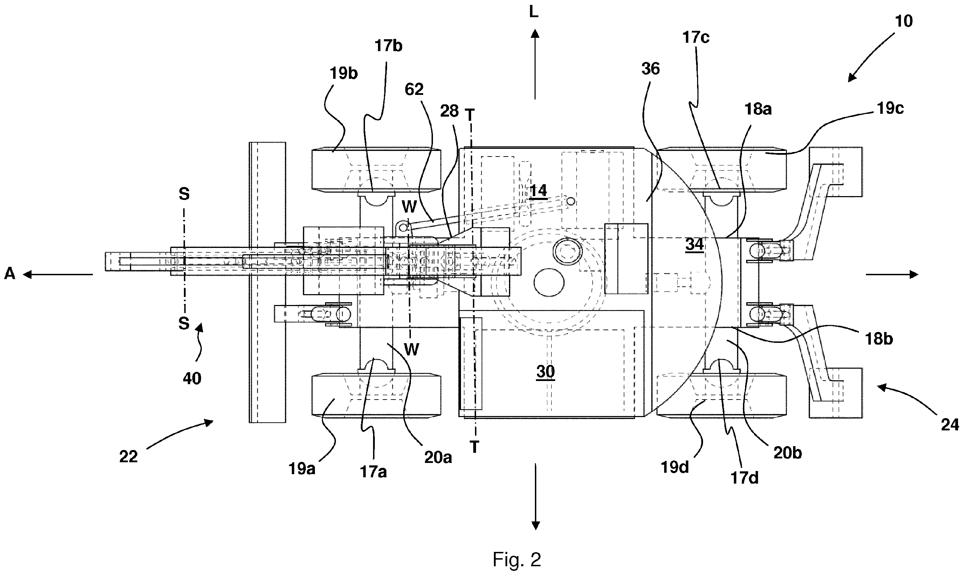

Shown most clearly in Figure 2, a yet further hydraulic cylinder 62 is provided to rotate (swing) the working arm arrangement 40 about the generally upright axis X. Using a hydraulic cylinder arrangement to rotate the working arm arrangement simplifies manufacture and operation of the working machine 10.

### Machine controls

A number of machine control inputs are provided in the cab 30. In this embodiment the inputs (with the exception of steering and braking) are electrically transmitted via a CAN bus to one or more superstructure Electronic Control Units (ECUs) 86, incorporating a suitable microprocessor, memory, etc. to interpret the inputs to signal the various valves for controlling movement of the working arm etc. and/or one or more further undercarriage ECUs 87 to ultimately control hydraulic functions in the undercarriage, including a stabiliser/dozer valve 79, a fan motor 69b, park brake valve 31a, axle lock valve 33a, main pump 74, transmission pump 75b, steer mode valve 97.

In alternative embodiments an ECU may only be provided in base assembly (e.g. housed in the undercarriage) and signals from the machine input controls may be sent directly to the ECU(s) 87 in the undercarriage instead of via the ECU(s) 86 in the superstructure. The electrical connections for such an arrangement can be routed from the control inputs to the ECU 87 via the slew ring and rotary joint arrangement.

The control inputs include: joysticks 88 to control operation of the working arm 40, switches 89 for various secondary functions, a hand throttle 90 to set engine speed for working operations, a foot throttle 91 to dynamically set engine speed for roading/manoeuvring, and a forward/neutral/reverse (FNR) selector 92 to engage drive in a desired direction.

Due to the safety-critical nature of steering and braking, the brake pedal and steering are hydraulically controlled by a brake pedal 94 and steer valve 95 linked to a steering wheel (not shown). Hydraulic fluid feed is from the dedicated steer pump 74' via the rotary joint 85 and a priority valve 96, which ensure an appropriate supply of hydraulic fluid is provided to the brake pedal 94/steer valve 95, dependent upon demand.

The steer valve 95 then feeds the steer mode valve 97 in the undercarriage 12, which controls whether the machine is operating in four-wheel steer (off road), two-wheel steer (on road) or crab steer, via another feed through the rotary joint. The steer mode valve then feeds hydraulic fluid to appropriate steering cylinders 98, dependent upon the mode chosen.

The brake pedal 94 supplies fluid to service brakes 99 at the wheel ends also via a feed through the rotary joint. A separate hydraulic fluid feed from a fan pump 69a supplies a parking brake valve 31a as well as the fan motor 69b and axle lock valve 33a under the control of the superstructure ECU(s) 86 and undercarriage ECU(s) 87.

In other embodiments, braking and steering may be effected via electronic control, provided a suitable level of fault tolerance is built into the system.

### High speed roading operation

When operating on road ("roading") or e.g. manoeuvring on a level/hard surface, speed of movement of the machine 10 is preferred ahead of traction or torque. Thus, in a first two-wheel drive operating mode, the vehicle operator selects 2WD on a 2WD/4WD selector (not shown), signalling the appropriate superstructure ECU 86, which in turn signals the transmission pump 75b via the undercarriage ECU 87 to permit the flow of hydraulic fluid to the high speed motor 76.

Thereafter, the operator selects forward or reverse from the FNR selector 92, the signal for which is fed through to the transmission pump 75b in a similar manner to direct hydraulic fluid therethrough in the correct flow direction to turn the high speed motor 76, and therefore the wheels 19a and 19b, in the desired direction.

The operator then sets the engine speed using the foot throttle 91 which in turn drives the transmission pump 75b at the desired speed. The undercarriage ECU 87 controls the swash angle of the pump 75b and high speed motor 76, resulting in rotation of the high speed motor 76 and driven rotation of the wheels 19c, 19d on the first axle 20a.

Typically, this enables travel at a maximum speed of around 40km/h.

### Low speed operation

For low speed, higher torque, higher traction manoeuvring, typically in an off-road location such as a construction site, the operator selects a second four wheel drive operating mode from the 2WD/4WD selector. This in turn signals superstructure ECU 86, which in turn signals the transmission pump 75b via the undercarriage ECU 87 to permit the flow of hydraulic fluid to both the high speed motor 76 and low speed motor 77.

Thereafter, the operator selects forward or reverse from the FNR selector 92, the signal for which is fed through to the transmission pump 75b in a similar manner to determine the direction of flow of hydraulic fluid into the high speed motor 76 and low speed motor 77.

The operator then sets the engine speed using the foot throttle 91 which in turn drives the transmission pump 75b at the desired speed. The undercarriage ECU 87 preferably controls the swash angle of the pump 75b and high speed motor 76, ultimately resulting in rotation of the high speed motor 76, low speed motor 77 and drive to the wheels 19a, 19b, 19c, 19d on both the first and second axles 20a, 20b at compatible speeds.

Typically, this operating mode provides a lower maximum speed for off-road operation e.g. of 10km/h or less.

### Modular Undercarriage Assembly

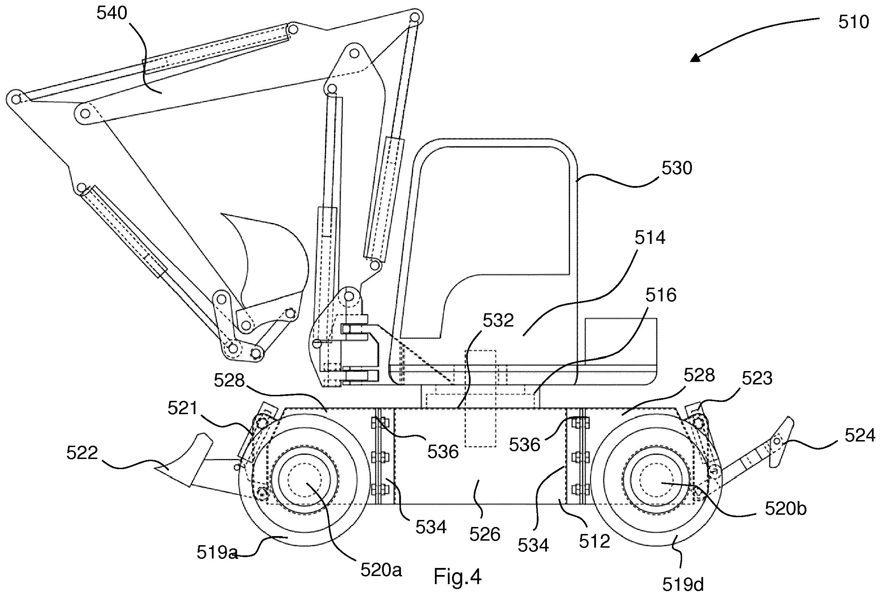

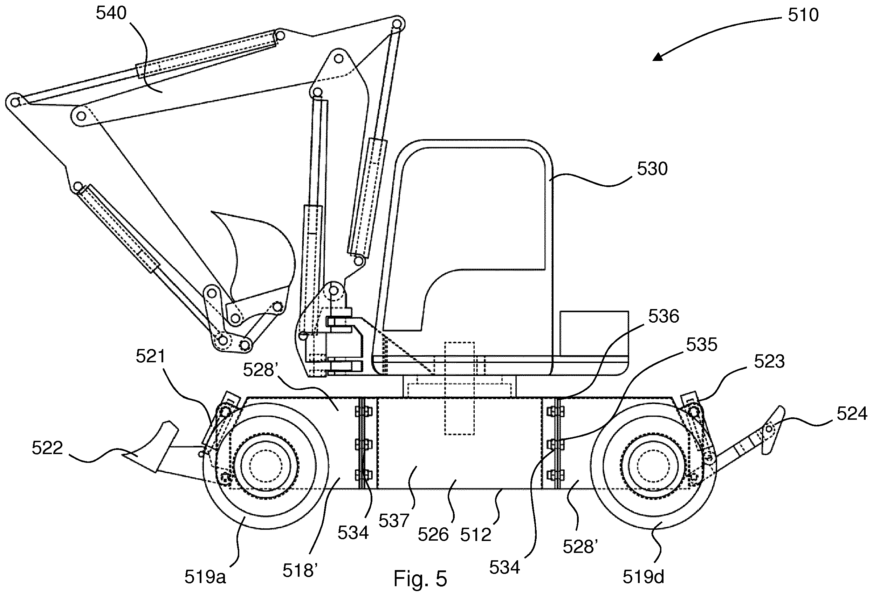

Referring to Figures 4 and 5, there is illustrated in somewhat simplified form a working machine 510 according to an embodiment of the present invention. The drive arrangement of the present embodiment can be considered to be substantially the same as described above, with the drive arrangement is housed in the undercarriage assembly 512.

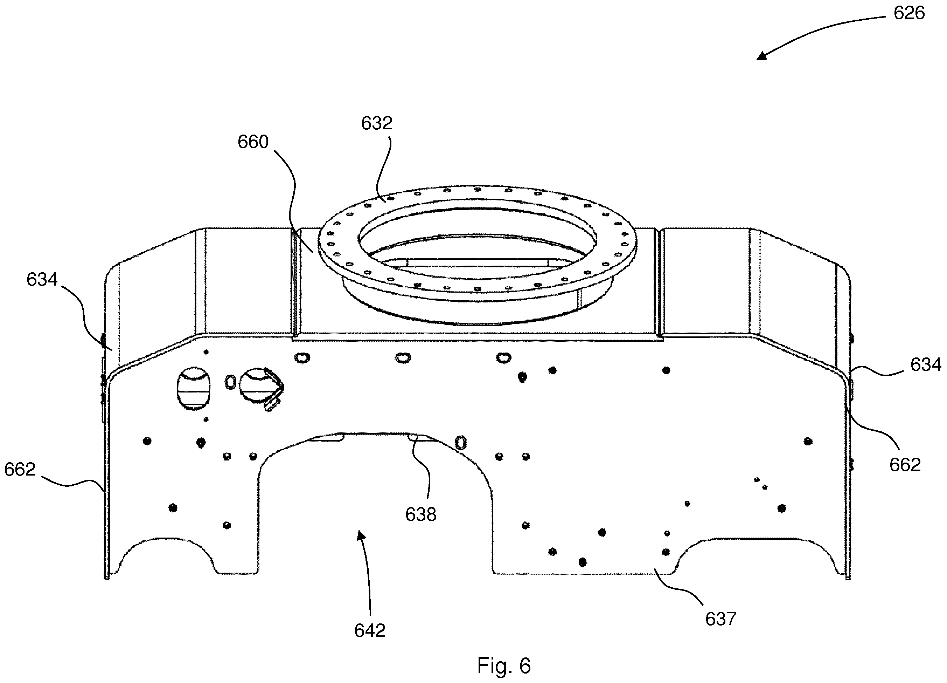

The undercarriage assembly 512 comprises a main chassis 526 having a mounting arrangement 532 so as to mount the superstructure 514 thereon via a slew ring 516 to allow rotation of the superstructure with respect to the undercarriage. In other embodiments, the mounting arrangement 532 may be configured so that the orientation of the superstructure is fixed with respect to the undercarriage 512. The main chassis 526 comprises a front and rear end and two side plates 537 extending therebetween, and which act as part of the chassis rails. The front and rear ends each have a mounting interface 534 for mounting a subsidiary chassis 528 thereon. The mounting interface 534 consists of three bores (not visible) on flanges at each corner of the front and rear surface, to secure the subsidiary chassis 528 to the main chassis 526 with bolts 535 or other suitable fasteners. The side plates 537 of the main chassis 526 are fabricated from sheet steel with suitable cut-outs (not visible) to allow drive shafts, hoses etc. to pass through. In other embodiments, the mounting interface 534 may comprise a surface suitable for welding the subsidiary chassis 528 to the main chassis 526 (see Figures 6 to 8 below).

The subsidiary chassis 528 have a front and rear end and two side plates 518' extending longitudinally therebetween where a mounting interface 536 is located at either the front or rear end of the subsidiary chassis 528. The mounting interface 536 of each subsidiary chassis 528 are in the form of flanges with three bores which are complimentary to the bores 534 of the main chassis 526. In other embodiments the number of bores may be altered as required, and may also be provided on flanges extending transversely on top and/or bottom edges of the main and subsidiary chassis.

The subsidiary chassis 528 have either a stabiliser leg arrangement 524 or a dozer blade arrangement 522 pivotally mounted to an opposing end of the subsidiary chassis 528 to the mounting interface 536. The stabiliser leg arrangement 524 or a dozer blade arrangement 522 can be raised or lowered by hydraulic cylinders 523, 521 respectively using a known arrangement. The dozer blade arrangement 522 may also act as a stabiliser for the machine 510, by lifting the adjacent wheels off the ground when excavating.

Each subsidiary chassis 528 is connected to a ground engaging structure, which in this embodiment includes one of drive axles 520a and 520b mounted to the subsidiary chassis and wheels 519 rotatably attached to each axle end. The length between the front and rear end of the subsidiary chassis 528 can be selected to suit the function of the working machine 510. Figure 4 shows two short subsidiary chassis 528 resulting in a working machine 510 with a relatively short length and short wheel base, which is suitable for working machines which require a smaller turning circle and to work in confined spaces, such as an excavator. Conversely, Figure 5 illustrates a working machine 510 with two long subsidiary chassis 528' resulting in a long wheel base which may be more suitable for working machines requiring a more stable undercarriage such as a crane or rotating telehandler. In other embodiments a combination of a long and a short subsidiary chassis may be used.

Referring to Figures 6, 7 and 8, an alternative main chassis 626 and subsidiary chassis 728 are illustrated. The main chassis 626 is fabricated from two metal side plates 637, 638 and a top plate 660 which is welded to the side plates at their top edges. The top plate 660 includes a mounting arrangement 632 in the form of a slew ring located substantially in the centre of the top plate. The main chassis 626 further includes two end plates 662 which are bent around the upper corners and are welded to the side plates 637, 638. The end plates 662 extend to meet the edges of the top plate 660 to define a generally rectangular space for the transmission components.

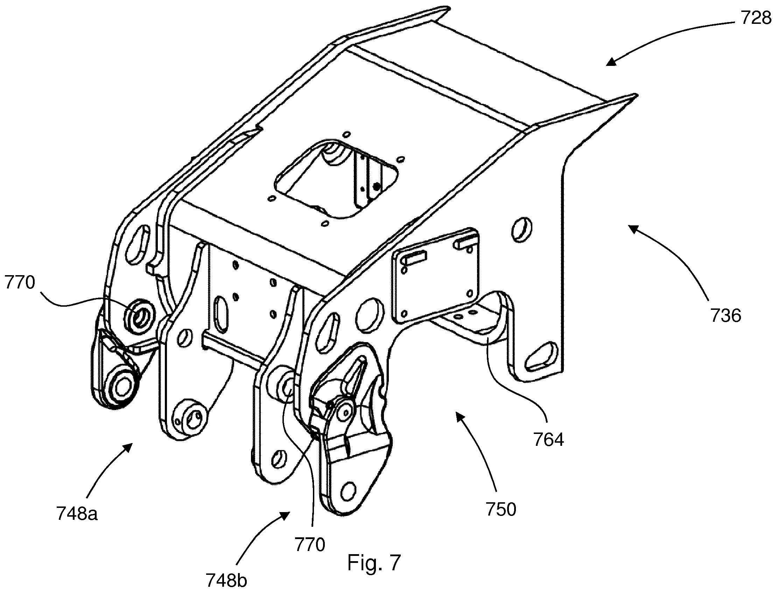

The main chassis 626 comprises two mounting interfaces 634 defined by the end plates 662. In this embodiment, the mounting surfaces 634 are configured so as to enable a subsidiary chassis 728, as shown in Figure 6 and 7, be offered up to conform to the mounting surface of the main chassis 626 and then be welded thereon.

The main chassis 626 has a recess indicated at 642 in one of the side surfaces 637 configured so as to enable the output from the engine (not shown) to pass into the main chassis. The side surface 638 also has multiple perforations in its surface for the mounting of ancillary components or structural components of a side pod, in which the engine is housed, onto the main chassis or to allow pipework and cabling to pass through.

Referring to Figure 7, the subsidiary chassis 728 has a mounting arrangement indicated generally at 736 which is shaped to conform to the corresponding mounting arrangement 634 of the main chassis 626 (as shown in Figure 6) and to be welded thereon.

The subsidiary chassis includes two arm mounting arrangements 748a and 748b provided at the lowermost point of the surface opposite of the mounting arrangement 736. The arm mounting arrangements 748a, 748b are each in the form of a pair axially aligned bores which allow for a stabiliser leg arrangement, dozer blade arrangement etc. to be pivotally mounted onto the subsidiary chassis 728 so as to be activated by hydraulic cylinders (not shown) mounted to pivots 770 to perform a work function.

The subsidiary chassis 728 has a recess 750 defining an inverted U-channel extending laterally through its side surfaces configured to allow a drive axle (not shown) to be mounted to the chassis. In this embodiment the subsidiary chassis 728 includes a first 764 and a second (not visible) mounting frame extending between the side surfaces of the subsidiary chassis. In this embodiment, the mounting frames are welded to the inside of the subsidiary chassis 728. The drive axle is secured to the subsidiary chassis 728 via a pivot member (not shown) extending between the first and second mounting frame, this arrangement allows the drive axle to be capable of limited articulation, thereby permitting the wheels to remain in ground contact, even if the ground is uneven.

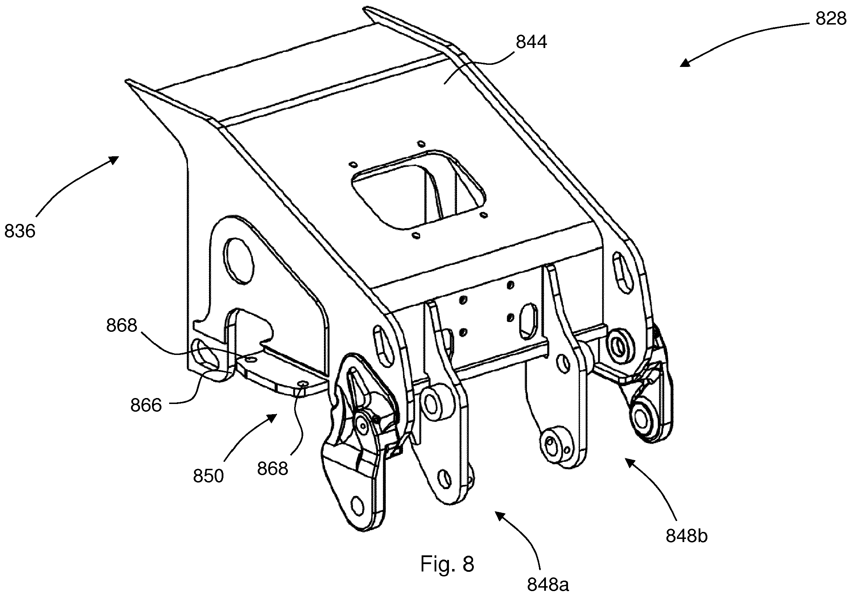

Referring to Figure 8, an alternative subsidiary chassis 828 is illustrated. Corresponding components of the figure are labelled 100 higher with respect to Figure 7 and only differences are discussed. The metal frame of the subsidiary chassis 828 is substantially the same as described in Figure 7. In this embodiment, a plate 866 is welded to both sides of the subsidiary chassis so as to secure the plate along the recess 850. The plate 866 includes a number of bores 868 at each end to enable the attachment of a drive axle (not shown), in order to fix the drive axle with respect to the subsidiary chassis 828 and prevent articulation.

### Crane

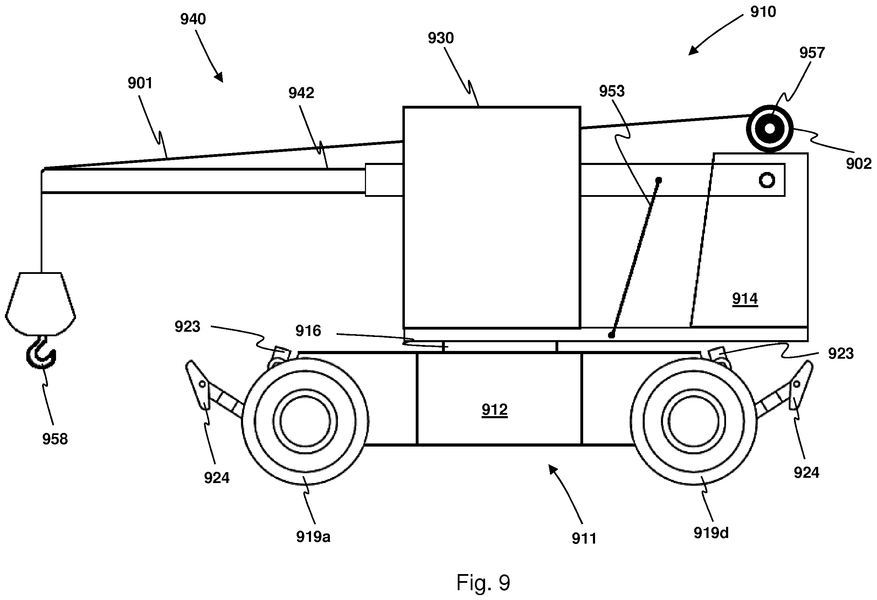

Referring now to Figure 9, an alternative working machine 910 is shown, in this embodiment the working machine is a crane. The working machine 910 has a similar undercarriage assembly 912 to that of the working machine 510 of Figure 5, with the long subsidiary chassis. Corresponding components of the figure are labelled with the prefix '9' instead of '5' with respect to Figure 5 and only differences are discussed.

The superstructure 914 is mounted to the undercarriage 912 via a slew ring 916 as described previously, such that the superstructure and working arm arrangement 940 can rotate relative to the undercarriage.

The connected superstructure 914 has a crane working arm 940 in the form of a telescopic boom which may be positioned horizontally in its lowest position, as illustrated. In the present embodiment, the hoist includes a cable 901 and a winch 902, where the winch is provided at the base of the boom. Positioning the motor 957 and the winch 902 at the rear of the boom 940, as opposed to the front, improves lift capacity and forward stability of the crane.

In such an embodiment the undercarriage 912 has four stabiliser legs 924 connected thereto and during a lifting operation the stabiliser legs are fully extended to lift the wheels 919 of the undercarriage off the ground.

### Stabiliser/dozer linkage

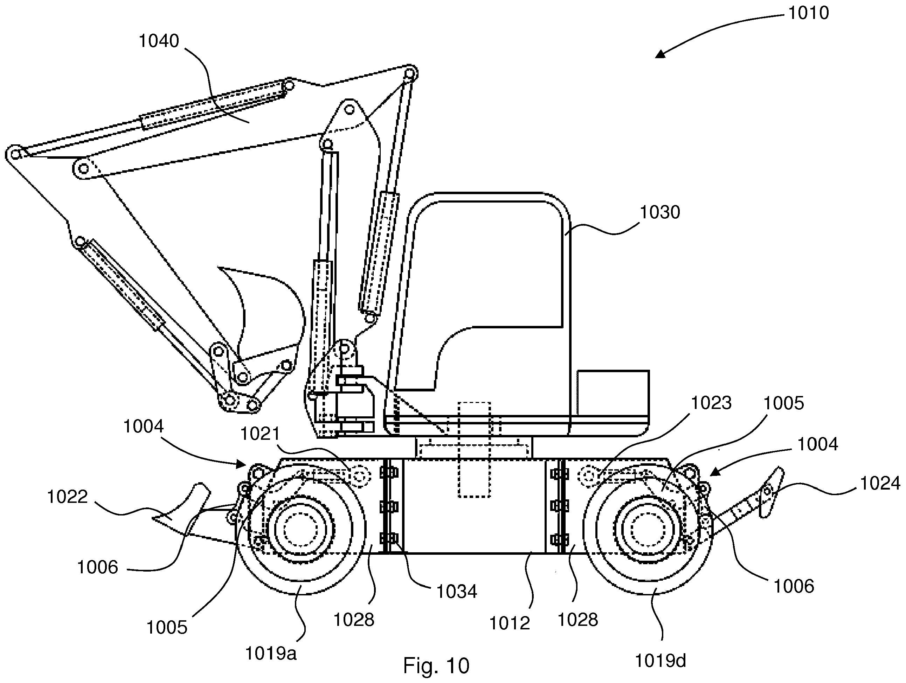

Referring to Figure 10, an alternative working machine 1010 is shown. The drive arrangement of the present embodiment can be considered to be substantially the same as described above, corresponding components of the figure are labelled 100 higher with respect to Figure 8 and only differences are discussed.

In this embodiment the linear actuators in the form of hydraulic cylinders 1021, 1023 are mounted within the subsidiary chassis 1028 and extend out of openings in the subsidiary chassis so as to actuate a dozer blade arrangement 1022 or a stabiliser leg arrangement 1024 respectively via a linkage 1062. It can be seen that both linkages 1004 are substantially identical, despite connecting to differing arms, and comprise a generally L-shaped lever 1005 pivotally mounted to the subsidiary chassis 1028 at the apex of the two arms forming the L. One free end of the "L" pivotally connects to the hydraulic cylinders 1021, 1023 and the other free end pivotally connects to an end of a link arm 1006. A second end of the link arm 1006 pivotally connects to the dozer blade 1022 or stabiliser leg 1024. This linkage effectively converts generally horizontal extension and contraction of the cylinders 1021, 1023 into generally vertical arcuate movement of the dozer blade or stabiliser legs.

Providing the hydraulic cylinders within the subsidiary chassis 1028 minimises the overall size of the undercarriage and may improve visibility of the operator. Furthermore, this arrangement will provide the hydraulic cylinders with protection from damage.

Providing a main chassis which can be substantially the same across a variety of working machines, such as a crane, a telehandler or an excavator, may reduce the number of parts and allows for a single production line to produce multiple machines thereby reducing cost. The modular arrangement may also save cost by making transport of the main and subsidiary chassis more efficient if manufactured and assembled at different locations, as it may be possible to pack more chassis into a given volume for shipping if split into multiple assemblies as described above. Providing a subsidiary chassis which can be substantially the same with the exception of the drive axle mount may allow for economies of scale to provide for the lower cost manufacture of the undercarriage components.

### Variants

Although the invention has been described above with reference to one or more preferred embodiments, it will be appreciated that various changes or modifications may be made without departing from the scope of the invention as defined in the appended claims.

In an alternative embodiment, the main chassis may have mounts for an axle, a hydraulic cylinder and one of a dozer blade arrangement, a stabiliser leg arrangement or a tractor-type hydraulic three-point linkage. In this embodiment, the main chassis may be configured to mount only one subsidiary assembly to the main chassis.

In a further alternative embodiment, the main chassis may be configured so as to define a recess at its front and rear ends (e.g. by having chassis rails in the form of opposed C-beams). The members may be configured so as to enable a subassembly to be inserted into the recess in the main chassis and be releasably secured to the main chassis. In this embodiment, the subassembly may be a stabiliser leg arrangement, a dozer arm arrangement, a three- point linkage etc. In alternative embodiments, the subassembly may also mount a drive axle to the main chassis, where the axle may or may not be fixed with respect to the subassembly in a similar way to that described in Figures 7 and 8.

Alternatively, the main chassis may have structural members, such as longitudinally extending chassis members protruding from the front and/or rear surfaces of the main chassis. A subassembly having an actuator to perform a work may be configured to mount over these extending chassis members and may be able to be (optionally releasably) secured to the main chassis via the chassis members. The subassembly may a stabilizer leg arrangement, a dozer blade arrangement, a three-point linkage etc. In this embodiment the axle mount may either located on the main chassis or the subassembly may be further configured to mount an axle thereon.

The working machine may be operated using manual, hydraulic or electro-hydraulic controls.

In other embodiments, an alternative transmission arrangement may be used, such as a conventional gearbox, powershift gearbox or torque converter gearbox. An alternative prime mover may also be used instead of or in conjunction with an IC engine, for example an electric motor.

In the present embodiment, the wheels on both axles are steerable (i.e. the working machine is configured for four wheel steer), but in alternative embodiments only the wheels on one of the axles may be steerable (i.e. the working machine is configured for two wheel steer).

## Claims

1. An undercarriage (512, 912, 1012) for a working machine (510, 910, 1010) comprising a main chassis (526, 626, 926, 1026) and a subsidiary chassis (528, 728, 828, 928, 1028) wherein the main chassis (526, 626, 926, 1026) comprises a mounting arrangement (532, 632, 932, 1032) to mount a superstructure (574, 910, 1010) thereon and a mounting interface (534, 634, 934, 1034) to mount the subsidiary chassis (528, 728, 828, 928, 1028) thereon, wherein the subsidiary chassis (528, 728, 828, 928, 1028) comprises a mount for an axle;
**characterised in that**;
a side pod is mounted to the main chassis (526, 626, 926, 1026), the side pod comprising a drive arrangement including a prime mover (564, 964, 1064).

2. An undercarriage (512, 912, 1012) according to claim 1, wherein the subsidiary chassis (528, 728, 828, 928, 1028) further comprises an actuator (1021, 1023) to perform a work function.

3. An undercarriage (512, 912, 1012) according to claim 2, wherein the subsidiary chassis (528, 728, 828, 928, 1028) comprises a dozer blade arrangement (1022), or a stabilizer (1024).

4. An undercarriage (512, 912, 1012) according to claim 2 or claim 3, wherein the actuator (1021, 1023) is housed within the subsidiary chassis (528, 728, 828, 928, 1028).

5. An undercarriage (512, 912, 1012) according to claim 4, wherein the length of the subsidiary chassis (528, 728, 828, 928, 1028) is a selected one of at least two subsidiary chassis (528, 728, 828, 928, 1028) of different lengths.

6. An undercarriage (512, 912, 1012) according to any preceding claim, wherein the main chassis (526, 626, 926, 1026) further comprises an ECU for controlling the drive arrangement.

7. An undercarriage (512, 912, 1012) according to any preceding claim, wherein the mounting arrangement (532, 632, 932, 1032) comprises a slew ring (516, 616, 916, 1016) to mount a superstructure (514, 914, 1014) thereon.

8. An undercarriage (512, 912, 1012) according to any preceding claim wherein the main (526, 626, 926, 1026) and subsidiary chassis (528, 728, 828, 928, 1028) are secured substantially permanently to each other.

9. An undercarriage (512, 912, 1012) according to any one of claims 1 to 7 wherein the main (526, 626, 926, 1026) and subsidiary chassis (528, 728, 828, 928, 1028) are releasably secured to each other.

10. An undercarriage (512, 912, 1012) according to any preceding claim, wherein an axle (520a, 520b, 920a, 920b, 1020a, 1020b) is mounted to the subsidiary chassis (528, 728, 828, 928, 1028).

11. An undercarriage (512, 912, 1012) according to any preceding claim, wherein a second subsidiary chassis (528, 728, 828, 928, 1028) is mounted to the main chassis (526, 626, 926, 1026).

12. An undercarriage (512, 912, 1012) according to any preceding claim, further comprising a fuel tank housed within the undercarriage.

13. A working machine (510, 910, 1010) comprising a superstructure (514, 914, 1014) including a working arm (540) configured so as to be capable of performing working operations, and an undercarriage (512, 912, 1012) according to any preceding claim, wherein the undercarriage (512, 912, 1012) is mounted to the superstructure (514, 914, 1014) via the mounting arrangement (532, 632, 932, 1032).

14. A method of forming an undercarriage (512, 912, 1012) of a working machine (510, 910, 1010), comprising the steps of:
a. manufacturing a main chassis (526, 626, 926, 1026);
b. manufacturing a subsidiary chassis (528, 728, 828, 928, 1028); and
c. mounting the subsidiary chassis (528, 728, 828, 928, 1028) to the main chassis (526, 626, 926, 1026);
**characterised in that**;
a side pod is mounted to the main chassis (526, 626, 926, 1026), the side pod comprising a drive arrangement including a prime mover (564, 964, 1064).

15. A method of forming an undercarriage (512, 912, 1012) of a working machine (510, 910, 1010) according to claim 14 comprising a further step of selecting from at least two alternative working machines types which working machine type the undercarriage (512, 912, 1012) is to be incorporated into, and selecting the subsidiary chassis (528, 728, 828, 928, 1028) to be mounted to the main chassis (526, 626, 926, 1026) in accordance with the working machine (510, 910, 1010) selected.

## Patentansprüche

1. Fahrwerk (512, 912, 1012) für eine Arbeitsmaschine (510, 910, 1010), umfassend ein Hauptfahrwerk (526, 626, 926, 1026) und ein Nebenfahrwerk (528, 728, 828, 928, 1028), wobei das Hauptfahrwerk (526, 626, 926, 1026) eine Befestigungsanordnung (532, 632, 932, 1032), um darauf einen Überbau (574, 910, 1010) zu befestigen, und eine Befestigungsverbindung (534, 634, 934, 1034) umfasst, um daran das Nebenfahrwerk (528, 728, 828, 928, 1028) zu befestigen, wobei das Nebenfahrwerk (528, 728, 828, 928, 1028) eine Befestigung für eine Achse umfasst,
**dadurch gekennzeichnet, dass**
ein Seitengehäuse am Hauptfahrwerk (526, 626, 926, 1026), wobei das Seitengehäuse eine Antriebsanordnung umfasst, die eine Antriebsmaschine (564, 964, 1064) enthält.

2. Fahrwerk (512, 912, 1012) nach Anspruch 1, wobei das Nebenfahrwerk (528, 728, 828, 928, 1028) ferner ein Stellglied (1021, 1023) zum Ausführen einer Arbeitsfunktion umfasst.

3. Fahrwerk (512, 912, 1012) nach Anspruch 2, wobei das Nebenfahrwerk (528, 728, 828, 928, 1028) eine Planierschildanordnung (1022) oder eine Abstützung (1024) umfasst.

4. Fahrwerk (512, 912, 1012) nach Anspruch 2 oder Anspruch 3, wobei das Stellglied (1021, 1023) innerhalb des Nebenfahrwerks (528, 728, 828, 928, 1028) untergebracht ist.

5. Fahrwerk (512, 912, 1012) nach Anspruch 4, wobei die Länge des Nebenfahrwerks (528, 728, 828, 928, 1028) eine ausgewählte von wenigstens zwei Nebenfahrwerken (528, 728, 828, 928, 1028) unterschiedlicher Länge ist.

6. Fahrwerk (512, 912, 1012) nach einem der vorherigen Ansprüche, wobei das Hauptfahrwerk (526, 626, 926, 1026) ferner ein elektronisches Steuergerät zum Steuern der Antriebsanordnung umfasst.

7. Fahrwerk (512, 912, 1012) nach einem der vorherigen Ansprüche, wobei die Befestigungsanordnung (532, 632, 932, 1032) einen Drehring (516, 616, 916, 1016) umfasst, um einen Überbau (514, 914, 1014) darauf zu befestigen.

8. Fahrwerk (512, 912, 1012) nach einem der vorherigen Ansprüche, wobei das Hauptfahrwerk (526, 626, 926, 1026) und das Nebenfahrwerk (528, 728, 828, 928, 1028) im Wesentlichen permanent aneinander befestigt sind.

9. Fahrwerk (512, 912, 1012) nach einem der Ansprüche 1 bis 7, wobei das Hauptfahrwerk (526, 626, 926, 1026) und das Nebenfahrwerk (528, 728, 828, 928, 1028) lösbar aneinander befestigt sind.

10. Fahrwerk (512, 912, 1012) nach einem der vorherigen Ansprüche, wobei eine Achse (520a, 520b, 920a, 920b, 1020a, 1020b) am Nebenfahrwerk (528, 728, 828, 928, 1028) befestigt ist.

11. Fahrwerk (512, 912, 1012) nach einem der vorherigen Ansprüche, wobei ein zweites Nebenfahrwerk (528, 728, 828, 928, 1028) am Hauptfahrwerk (526, 626, 926, 1026) befestigt ist.

12. Fahrwerk (512, 912, 1012) nach einem der vorherigen Ansprüche, ferner umfassend einen Kraftstofftank, der innerhalb des Fahrgestells untergebracht ist.

13. Arbeitsmaschine (510, 910, 1010), umfassend einen Überbau (514, 914, 1014), enthaltend einen Arbeitsarm (540), der beschaffen ist, Arbeitstätigkeiten ausführen zu können, und ein Fahrwerk (512, 912, 1012) nach einem der vorherigen Ansprüche, wobei das Fahrwerk (512, 912, 1012) über eine Befestigungsanordnung (532, 632, 932, 1032) am Überbau (514, 914, 1014) befestigt ist.

14. Verfahren zur Ausbildung eines Fahrwerks (512, 912, 1012) einer Arbeitsmaschine (510, 910, 1010), umfassend die Schritte:
a) Herstellen eines Hauptfahrwerks (526, 626, 926, 1026),
b) Herstellen eines Nebenfahrwerks (528, 728, 828, 928, 1028) und
c) Befestigen des Nebenfahrwerks (528, 728, 828, 928, 1028) am Hauptfahrwerk (526, 626, 926, 1026),
**dadurch gekennzeichnet, dass**
ein Seitengehäuse am Hauptfahrwerk (526, 626, 926, 1026), wobei das Seitengehäuse eine Antriebsanordnung umfasst, die eine Antriebsmaschine (564, 964, 1064) enthält.

15. Verfahren zur Ausbildung eines Fahrwerks (512, 912, 1012) einer Arbeitsmaschine (510, 910, 1010) nach Anspruch 14, umfassend einen weiteren Schritt des Auswählens aus wenigstens zwei alternativen Arbeitsmaschinentypen, welchem Arbeitsmaschinentyp das Fahrwerk (512, 912, 1012) zu integrieren ist, und Auswählen des Nebenfahrwerks (528, 728, 828, 928, 1028), das am Hauptfahrwerk (526, 626, 926, 1026) entsprechend der ausgewählten Arbeitsmaschine (510, 910, 1010) zu befestigen ist.

## Revendications

1. Train de roulement (512, 912, 1012) pour une machine de travail (510, 910, 1010), le train de roulement comprenant un châssis principal (526, 626, 926, 1026) et un châssis auxiliaire (528, 728, 828, 828, 1028), le châssis principal (526, 626, 926, 1026) comprenant un agencement de montage (532, 632, 932, 1032) destiné au montage d'une superstructure (574, 910, 1010) et une interface de montage (534, 634, 934, 1034) destinée au montage du châssis auxiliaire (528, 728, 828, 828, 1028), le châssis auxiliaire (528, 728, 828, 828, 1028) comprenant un logement pour un axe,
**caractérisé en ce que**
un boîtier latéral est monté sur le châssis principal (526, 626, 926, 1026), le boîtier latéral comprenant un dispositif d'entraînement incluant un moteur principal (564, 964, 1064).

2. Train de roulement (512, 912, 1012) suivant la revendication 1, dans lequel le châssis auxiliaire (528, 728, 828, 828, 1028) comprend, en plus, un actionneur (1021, 1023) pour exécuter une fonction de travail.

3. Train de roulement (512, 912, 1012) suivant la revendication 2, dans lequel le châssis auxiliaire (528, 728, 828, 928, 1028) comprend un arrangement de lame de remblayage (1022) ou un stabilisateur (1024).

4. Train de roulement (512, 912, 1012) suivant la revendication 2 ou 3, dans lequel l'actionneur (1021, 1023) est logé à l'intérieur du châssis auxiliaire (528, 728, 828, 928, 1028).

5. Train de roulement (512, 912, 1012) suivant la revendication 4, dans lequel la longueur du châssis auxiliaire (528, 728, 828, 928, 1028) est une longueur sélectionnée parmi au moins deux châssis auxiliaires (528, 728, 828, 928, 1028) de longueurs différentes.

6. Train de roulement (512, 912, 1012) suivant une des revendications précédentes, dans lequel le châssis principal (526, 626, 926, 1026) comprend, en plus, une unité de commande électronique pour la commande du dispositif d'entraînement.

7. Train de roulement (512, 912, 1012) suivant une des revendications précédentes, dans lequel l'agencement de montage (532, 632, 932, 1032) comprend une une couronne pivotante (516, 616, 916, 1016) destinée au montage d'une superstructure (514, 914, 1014).

8. Train de roulement (512, 912, 1012) suivant une des revendications précédentes, dans lequel le châssis principal (526, 626, 926, 1026) et le châssis subsidiaire (528, 728, 828, 928, 1028) sont fixés l'un à l'autre de manière essentiellement permanente.

9. Train de roulement (512, 912, 1012) suivant une des revendications 1 à 7, dans lequel le châssis principal (526, 626, 926, 1026) et le châssis subsidiaire (528, 728, 828, 928, 1028) sont fixés, l'un à l'autre, de façon amovible.

10. Train de roulement (512, 912, 1012) suivant une des revendications précédentes, dans lequel un axe (520a, 520b, 920a, 920b, 1020a, 1020b) est monté sur le châssis auxiliaire (528, 728, 828, 928, 1028).

11. Train de roulement (512, 912, 1012) suivant une des revendications précédentes, dans lequel un second châssis auxiliaire (528, 728, 828, 928, 1028) est monté sur le châssis principal (526, 626, 926, 1026).

12. Train de roulement (512, 912, 1012) suivant une des revendications précédentes, comprenant, en plus, un réservoir de carburant qui est logé à l'intérieur du train de roulement.

13. Machine de travail (510, 910, 1010) comprenant une superstructure (514, 914, 1014) incluant un bras de travail (540) configuré de manière à être capable d'exécuter des opérations de travail, et un train de roulement (512, 912, 1012) suivant une des revendications précédentes, le train de roulement (512, 912, 1012) étant monté sur la superstructure (514, 914, 1014) par l'intermédiaire de l'agencement de montage (532, 632, 932, 1032).

14. Procédé de formation d'un train de roulement (512, 912, 1012) d'une machine de travail (510, 910, 1010) comprenant les étapes suivantes :
a. fabrication d'un châssis principal (526, 626, 926, 1026),
b. fabrication d'un châssis auxiliaire (528, 728, 828, 928, 1028), et
c. montage du châssis auxiliaire (528, 728, 828, 928, 1028) sur le châssis principal (526, 626, 926, 1026),
**caractérisé en ce que**
un boîtier latéral est monté sur le châssis principal (526, 626, 926, 1026), le boîtier latéral comprenant un dispositif d'entraînement incluant un moteur principal (564, 964, 1064).

15. Procédé de formation d'un train de roulement (512, 912, 1012) d'une machine de travail (510, 910, 1010) suivant la revendication 14, le procédé comprenant une autre étape qui consiste à sélectionner parmi au moins deux types de machine de travail alternatifs celui, dans lequel le train de roulement (512, 912, 1012) doit être intégré, et à sélectionner le châssis auxiliaire (528, 728, 828, 928, 1028) à monter sur le châssis principal (526, 626, 926, 1026) selon la machine de travail (510, 910, 1010) sélectionnée.
